# EUROPEAN PATENT APPLICATION

(11) **EP 4 715 374 A1**
(43) Date of publication of application: **25.03.2026**
(21) Application number: 24306545.5
(22) Date of filing: 19.09.2024
(51) Int. Cl.: G01N 21/95

(54) **DEFLECTOMETRY INSPECTION DEVICE FOR SEMICONDUCTOR SUBSTRATES**

(71) Applicant: UNITY SEMICONDUCTOR, 38330 Montbonnot-Saint-Martin (FR)
(72) Inventor: ISNARD, Christophe, Taipei City (TW); BERGOEND, Isabelle, 38420 Domène (FR); VIAL, Jean-Jacques, 38100 Grenoble (FR)
(74) Representative: IPAZ

(57) **Abstract**

The invention relates to a deflectometry inspection device (1) for semiconductor substrates, comprising:
- a substrate support frame (30) configured to support a substrate (4) to be inspected,
- at least one inspection module (20, 20a, 20b) comprising an inspection module frame (6, 6a, 6b), an illumination screen (2, 2a, 2b) configured to illuminate the substrate (4) to be inspected with a pattern (5), and a camera (3, 3a, 3b) configured to detect light reflected by the surface of the substrate (4) and to image the surface of the substrate (4) with the pattern, the illumination screen (2, 2a, 2b) and the camera (3, 3a, 3b) being arranged in a fixed positional relationship with respect to each other on the inspection module frame (20, 20a, 20b),
wherein the inspection module frame (6, 6a, 6b) is movable between an operational position and a maintenance position without altering the fixed positional relationship between the illumination screen (2, 2a, 2b) and the camera (3, 3a, 3b), wherein in the operational position, the inspection module (20, 20a, 20b) is configured to carry out inspection measurements, and in the maintenance position, the inspection module (20, 20a, 20b) is accessible by an operator.

## Description

### Field of the invention

The present invention relates to a deflectometry inspection device for semiconductor substrates.

The field of the invention is the field of inspection and control in semiconductor device manufacturing.

### Background

Semiconductor substrates, or wafers, are characterized by polished surfaces at several stages of the manufacturing process of semiconductor or optoelectronic devices, such as integrated electronics or optical circuits. The quality and conformity of these wafer surfaces need to be inspected.

Deflectometry is an example of a technique for non-destructive optical testing. Such technique is particularly well suited to detect and measure defects or small variations of slope on samples with a polished surface providing a specular reflection.

This technique is thus particularly well suited for inspecting semiconductor substrates, or wafers.

An example of an architecture for an inspection device for wafers using deflectometry is described in WO2009/141534. The inspection device comprises a wafer transport arm to carry and place the wafer to be inspected, and two inspection systems arranged on either side of the wafer. The inspection systems each comprise a light source and a camera. Each light source is positioned to emit light towards the surface of the wafer, and each camera is positioned to capture light reflected from the surface of the wafer.

In such inspection devices, as the inspection technique is based on the geometrical relationship between the light source(s), camera(s), and the wafer to be inspected, their relative positions have to be accurately calibrated and maintained during the measurements.

The deflectometry technique also requires bulky elements, such as large LCD screens, which need to be periodically replaced.

However, in known deflectometry systems as cited, the inspection systems, and in particular the light sources and the cameras, are fixed in a permanent fashion in a casing. Thus, maintenance tasks, repair works, or replacement of one or more of these elements require mostly a complete disassembly of the inspection device, and therefore, a complete loss of calibration. Prior to a subsequent use of the inspection device, all the calibration steps have thus to be repeated.

Further, such a configuration renders maintenance tasks time consuming and cumbersome.

Therefore, there is a need for an architecture of such inspection devices allowing better accessibility of components by an operator and conservation of calibration even through maintenance operations.

### Summary of the invention

A purpose of the present invention is to overcome at least one of the drawbacks of the known technique.

A purpose of the present invention is to propose an inspection device for semiconductor substrates, comprising at least one illumination screen and one camera, with at least a partial modular architecture allowing easy access for maintenance of components for service, replacement, or repair.

Another purpose of the present invention is to propose an inspection device for semiconductor substrates with at least a partial modular architecture having high dimensional stability, and allowing for calibration conservation after service operations.

It is also a purpose of the invention to propose an inspection device for semiconductor substrates with at least a partial modular architecture maintaining the positional or geometrical relationship between the illumination screen and the camera even when displaced.

At least one of these aims is achieved by a deflectometry inspection device for semiconductor substrates, comprising:
- a substrate support frame configured to support a substrate to be inspected,
- at least one inspection module comprising an inspection module frame, an illumination screen configured to illuminate the substrate to be inspected with a pattern, and a camera configured to detect light reflected by the surface of the substrate and to image the surface of the substrate with the pattern, the illumination screen and the camera being arranged in a fixed positional relationship with respect to each other on the inspection module frame,
wherein the inspection module frame is movable between an operational position and a maintenance position without altering the fixed positional relationship between the illumination screen and the camera, wherein in the operational position, the inspection module is configured to carry out inspection measurements, and in the maintenance position, the inspection module is accessible by an operator.

The substrate, or semiconductor substrate, can comprise, in a non-limitative way, a wafer, a compound wafer, or a panel.

The deflectometry inspection device according to the present invention, for inspecting semiconductor substrates, presents a partially modular structure. Thanks to the movable inspection module frame carrying the illumination screen and the camera in a fixed positional relationship, the inspection module frame can be moved between an operational position and a maintenance, or service, position without altering the relative position of the illumination screen and the camera. The fixed positional relationship between the illumination screen and the camera is maintained even in the service position.

When moving back to the operational position, the relative position of the illumination screen and the camera with respect to the semiconductor substrate to be inspected is maintained.

An existing calibration linking the illumination screen and the camera won't be lost when moving the inspection module frame for carrying out maintenance tasks on the components. Access to the screen and/or the camera is eased in the maintenance position for an operator. The inspection module frame may be moved between the two positions in a repeatable way.

In the case the screen, as a component undergoing increased wear, must be replaced, this can be done with a minimum of operation effort and calibration loss. Little hardware manipulations and adjustments are necessary.

The illumination screen is a geometrically extended light source displaying a pattern.

The illumination screen may be an LCD screen, or a diffusing screen combined with a projector, or an OLED screen arranged behind that screen.

Extended dimensions of the illumination screen are necessary to ensure that the illumination screen is imaged by the camera in all cases, even when the surface of the substrate exhibits deformations.

The displayed pattern may be, for example, a system of parallel lines or a grid, the orientation of which may be variable.

The camera typically comprises an imaging lens or imaging lens arrangement, and a sensor.

For the inspection module frame being movable, it may be mounted on a translation stage movable along a guide rail.

According to an embodiment, any point P_{d} in a plane of the illumination screen, any point Pₛ in a substrate surface plane, and any point, P_{c}, in an image plane of the camera are in a fixed positional relationship with each other in the operational position.

The fixed positional relationship may be established by calibration.

According to an embodiment, any point Pₛ in a substrate surface plane is in a fixed and known relationship with the points P_{d} in the plane of the illumination screen and the points P_{c} in the image plane of the camera when the inspection module is in the operational position.

The fixed and known relationship may be established by calibration using a calibration substrate.

Preferably, the camera and/or the illumination screen are removably and replaceably fixed to the inspection module frame.

This allows for replacing them completely in case of failure of any of these components.

According to an embodiment, the substrate support frame may also be movable between an operational position and a maintenance position.

For inspection measurements, the substrate can be put in place with the substrate support frame in the operational position. This can be done using a robotic arm.

The maintenance position may be used for maintenance purposes, for example, in order to render the access to other components of the device more convenient.

The inspection module frame and/or the substrate support frame may be removably arranged in the device.

The frame(s) may thus be completely removed from a main frame of the device.

Preferably, a plane of the surface to be inspected, and a lens plane and an image plane of the camera are arranged according to a Scheimpflug configuration.

The image plane corresponds to the plane of the sensor of the camera.

In the Scheimpflug configuration, the surface of the substrate is imaged on the camera in an in-focus manner, even though the camera is not on an optical axis perpendicular to the surface of the substrate. The plane of the surface of the substrate, the plane of sensor of the camera, and the plane of the imaging lens of the camera intersect on a Scheimpflug intersection.

Imaging the surface of the substrate on the camera in such a configuration optimizes the optical resolution and thus detects even small details or defects.

According to an embodiment, the device of the invention may comprise two inspection modules, of which one is arranged on either side of the substrate support frame in the operational position.

In this case, two opposite surfaces of the substrate may be inspected without moving the substrate, in particular simultaneously.

The inspection device may be used in single face or dual face measurement configuration.

In an embodiment, the device according to the present invention presents a modular design with the movable inspection module frame(s) arranged parallel to the substrate support frame.

According to an embodiment, the illumination screen may be rotatably mounted on the inspection module frame by a rotation module configured to rotate the illumination screen around its normal.

Thanks to the rotatable mounting, the rotational orientation of the illumination screen may be adjusted to align screen pixel lines with camera sensor pixel lines. This alignment is advantageous for instance to avoid aliasing effects in the images and also to avoid calculation errors which could occur for the X and Y axis.

Preferably the inspection module frame has a perforated structure.

This structure allows for passing filtered air flow in order to keep the device, and in particular the substrate surface(s), dust free.

The device according to the invention further comprises means to position the inspection module frame(s) in a repeatable way in the operational position, such that the position in the plane of the illumination screen and the camera with respect to the semiconductor substrate is maintained.

The device according to the invention may comprise a control unit configured to operate the at least one inspection module.

### Description of the figures and embodiments

Other advantages and characteristics will become apparent on examination of the detailed description of an embodiment which is in no way limitative, and the attached figures, where:
- FIGURE 1 is a diagrammatical representation of the principle of operation of a deflectometry inspection device according to the present invention;
- FIGURE 2 is a diagrammatical representation of an embodiment of a deflectometry inspection device according to the present invention;
- FIGURE 3 shows an inspection module of a deflectometry inspection device according to an embodiment of the present invention;
- FIGURE 4 represents an inspection module in the operational position and in the maintenance position; and
- FIGURE 5 illustrates the Scheimpflug configuration of components of a device according to the present invention.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the FIGURES, elements common to several figures may keep the same reference.

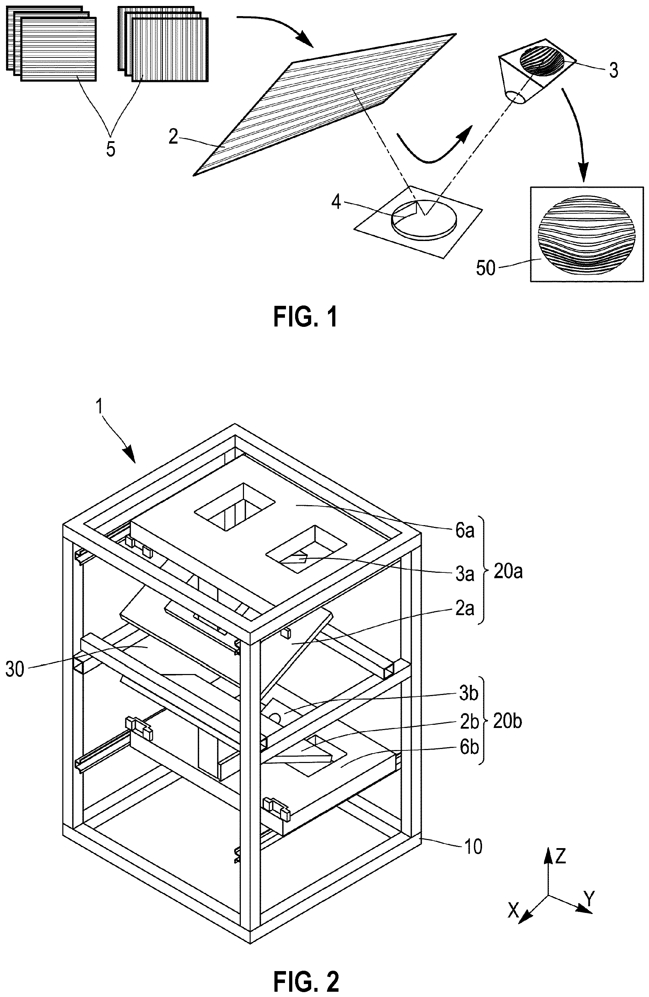

FIGURE 1 is a diagrammatical representation of the principle of operation of a deflectometry inspection device according to the present invention.

The device comprises an extended illumination screen 2 which allows to display patterns, such as grids or stripes according to various orientations. The illumination screen 2 could be, for example, an LCD-based screen, such as a 4K, 43 inches TFT screen.

The device also comprises a camera 3 arranged to image the patterns displayed by the screen 2 after having been reflected by the surface of a semiconductor substrate in the form of a wafer 4 to be inspected. The surface is a specular, or well-polished, surface.

An example of an image 50 of the surface is also shown in FIGURE 1.

The principle of operation of the device is as follows.

The light incident on the surface of the wafer 4 at each point is reflected with a reflection angle identical to the incidence angle, according to Fresnel's law.

If the surface of the wafer 4 is flat, its normal vector is in the same orientation everywhere, and the light is reflected with the same reflection angle (at least for a screen positioned at a far distance) at all points. In that case, the camera 3 images the patterns displayed by the illumination screen 2 without distortion.

In case of a local deformation, or a variation of the orientation of the normal to the surface of the wafer 4, the light is reflected locally with a different reflection angle than the light reflected on the flat surface parts. The pattern imaged on the camera 3 is thus distorted with respect to the pattern image of a flat surface. This distortion thus results directly from an angular deviation of the specular reflected light due to the local orientation of the normal to the surface of the sample. The distortion may then be used to obtain an information on the local deformation with a very high sensitivity.

The imaged patterns allow to encode the deformations of the wafer surface. Several kinds of patterns can be used.

For example, as illustrated in FIGURE 1, a plurality of patterns 5 of periodic stripes, having sinusoidal amplitude or intensity, can be displayed on the screen 2, and a plurality of corresponding images are acquired by the camera 3.

As illustrated in FIGURE 1, the patterns are oriented successively according to two perpendicular directions, to allow obtaining a complete information on the orientation of the local normal vectors of the surface.

The sinusoidal stripes allow encoding the space with phase values varying in a known manner (usually linearly) along the direction perpendicular to the stripes, and to use state-of-the art phase-retrieval algorithms to obtain the surface deformation information. Indeed, by demodulating the sinusoidal stripes as acquired by the camera 3, it is possible to retrieve a phase value at each of the points of the camera image.

Known phase-retrieval techniques include, for instance, phase-shifting techniques. Several sinusoidal patterns, shifted laterally in the direction perpendicular to the stripes, are successively displayed on the screen, and the corresponding images are acquired by the camera. The intensity variation across the patterns for any point of the camera image can then be processed to retrieve a phase value at the point. Well-known phase shifting algorithms use for instance 4 images shifted of pi/2 between them.

FIGURE 2 is a diagrammatical representation of an embodiment of a deflectometry inspection device according to the present invention.

The device 1, as illustrated in FIGURE 2, comprises a main frame 10, two inspection modules 20a, 20b, and a substrate support frame 30.

Of course, the inspection device may also comprise a single inspection module and a substrate support frame arranged in the main frame.

The inspection modules 20a, 20b and the substrate support frame 30 are mounted in the main frame 10. The inspection modules 20a, 20b are mounted on two opposite sides of the substrate support frame 30.

The wafer support frame 30 is configured to hold a substrate such as a wafer 4 to be inspected.

The wafer 4 to be inspected may, for example, be a 200 mm or 300 mm diameter wafer.

Within the substrate support frame 30, the wafer to be inspected may be held in place by a chuck adapted to the size of the wafer. Different chucks may be used for differently sized wafers. The chucks may be calibrated such that no re-calibration is necessary when removing and resetting a chuck.

Each of the inspection modules 20a, 20b comprises an illumination screen 2a, 2b and a camera 3a, 3b mounted on an inspection module frame 6a, 6b.

Each illumination screen 2a, 2b is configured to illuminate the wafer 4 to be inspected with a pattern, and each camera 3a, 3b is configured to detect light reflected by the corresponding surface of the wafer 4 and to image that surface with the pattern, as explained above.

In the embodiment as illustrated in FIGURE 2, the inspection module frames and the wafer support frame are arranged parallel to each other within the main frame.

According to an embodiment, the inspection module frame(s) and/or the wafer support frame may be removably fixed in the main frame such as to be able to be completely removed when necessary.

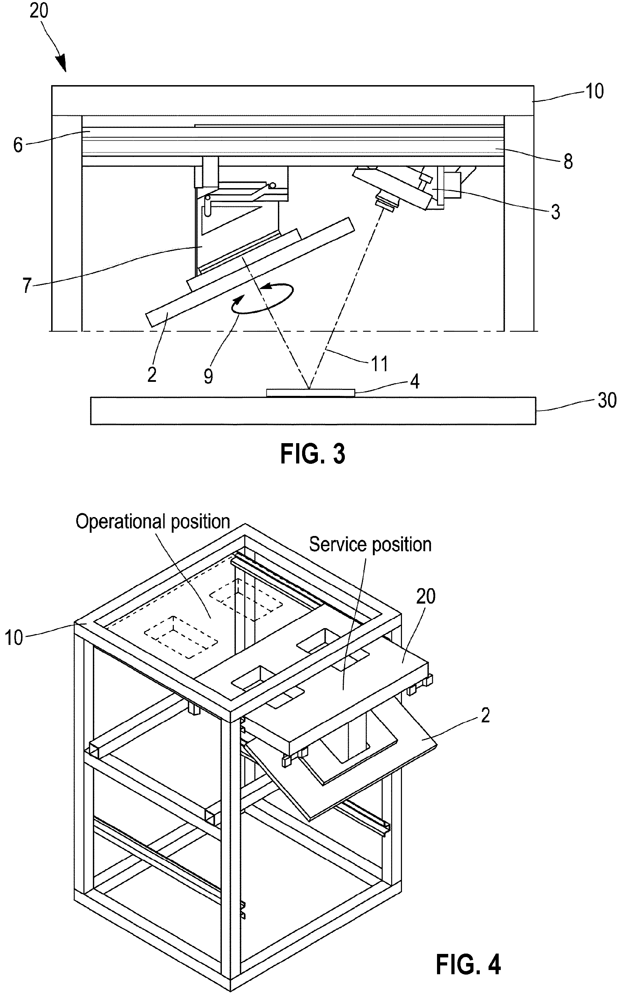

FIGURE 3 illustrates an inspection module 20 of a deflectometry inspection device according to an embodiment of the present invention.

The illumination screen 2 is fixed to the inspection module frame 6 by means of a screen holder 7. The illumination screen 2 is fixed to the inspection module frame 6 in a fixed angular orientation with respect to the inspection module frame.

In the embodiment as represented in FIGURE 3, the illumination screen 2 is rotatably mounted on the inspection module frame 6, as indicated by arrow 9, in order to be able to rotate the illumination screen 2 around its normal 11. This may be realized by a rotation module integrated with the screen holder 7. The rotational adjustment of the illumination screen 2 may necessary to align the pixel lines of the illumination screen 2 with those of the camera sensor.

The camera 3 is also fixed to the inspection module frame 6.

The illumination screen 2 and the camera 3 are mounted in a lockable way on the inspection module frame 6, such as, once locked, they are arranged in a fixed position with respect to each other on the inspection module frame 6, such that they have a fixed positional relationship.

Preferably, the camera 3 and/or the illumination screen 2 are removably fixed to the inspection module frame 6.

The inspection module frame 6 is preferably of a light and rigid structure.

In particular, the inspection module frame 6 may have a perforated structure. It may be made, for example, of metal mesh. This structure is advantageous for allowing airflows flow through the inspection module frames in order to keep the wafer surface dust and particle free, which is of particular importance for a use in a clean room.

FIGURE 3 also represents a part of the main frame 10 of the device 1, as well as the substrate support frame 30 with a wafer 4.

As represented in FIGURE 3, the inspection module frame 6 is movably mounted on a guide rail 8, or translation stage, fixed to the main frame 10. The inspection module frame 6 may be equipped with wheels, rolls or any other gliding mechanism in order to move on the guide rail.

Thanks to the arrangement of the inspection frame module 20 on the guide rail 8, the inspection module 20 is movable in and out of the main frame 10, such as a drawer.

The inspection module frame 20 is movable between an operational position and a maintenance position without altering the fixed positional relationship between the illumination screen and the camera.

In the operational position, the inspection module frame is entered in the main frame of the device, and the device is ready to carry out inspection measurements.

In the maintenance position, the inspection module is pulled out from the main frame of the device, thereby being accessible by an operator. In this position, the components of the inspection module, e.g., the camera and the illumination screen, are accessible to be removed, replaced, repaired, etc.

FIGURE 4 partly represents an inspection device according to the present invention, with an inspection module 20 in the operational position and in the maintenance position (or service position), respectively.

The device according to the invention further comprises means to position the inspection module frame(s) in a repeatable way in the operational position, such that the position of the illumination screen and the camera with respect to the wafer is maintained in the plane of the guide rail 8 and perpendicularly to that plane, when the inspection module frame(s) are in the operational position.

The positioning means may comprise, for example, stops and latches.

The substrate support frame may also be movably mounted in the main frame 10. The wafer support frame may then be moved between an operational position, wherein a wafer to be inspected is ready to be inspected by the device, and a maintenance position.

Advantageously, the illumination screen is fixed on a screen holder having a fixed, defined angle with respect to the inspection module frame. Thus, when removing and replacing the screen, its angular orientation with respect to the inspection module frame may be conveniently reproduced within its manufacturing tolerances. Only its rotational orientation may need to be adjusted, as detailed above. Of course, when replacing the illumination screen by a new one, a complete recalibration is necessary.

According to an embodiment, in the inspection module, the illumination screen and the camera are positioned symmetrically with respect to a normal to the surface of the wafer, or close to such symmetrical arrangement. The illumination screen can then be imaged through specular reflection on the wafer surface over the whole field of view of the camera. In addition, the illumination screen is preferably large enough so that even with a sample having a curvature within a predefined range, the screen is still imaged on the camera.

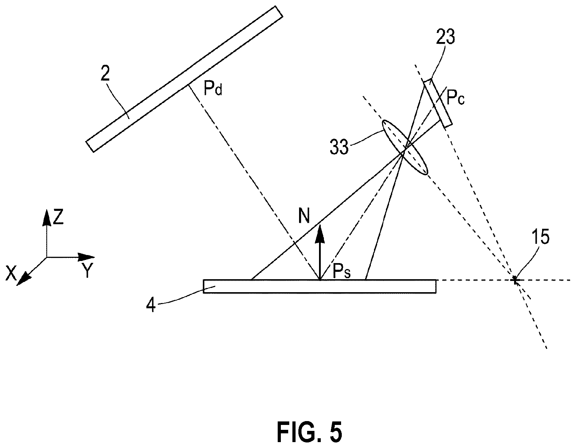

Since the camera is not oriented along an optical axis perpendicular to the surface of the wafer, the surface of the wafer, the sensor of the camera and its imaging lens are placed in a Scheimpflug configuration. This configuration is illustrated in FIGURE 5. In this configuration, the plane 12 of the wafer surface, the plane 13 of the sensor 23 (also called image plane), and the plane 14 of the lens 33 of the camera intersect in a common Scheimpflug intersection 15. N indicates the normal of the sample surface.

This configuration allows for obtaining a focused image of the wafer surface with the reflected pattern over the whole field of view, in order to image with the best resolution the smallest details on the wafer.

In order to be able to relate the phase measurements, as described above, to characteristics of the surface of the wafer, several methods may be employed, depending on the type of characteristics to be retrieved.

For topography measurements of the surface of the wafer, notably using a phase-retrieval method as described in relation with FIGURE 1, it is necessary to know the optical and geometrical characteristics of the illumination screen, the imaging lens, and the sensor of the camera. It is in particular necessary to know the relative positions of the illumination screen, the surface of the wafer, the imaging lens, and the sensor of the camera.

More precisely, a light beam issued from a point or an area P_{d} of the illumination screen with coordinates (x_{d}, y_{d}) in the local coordinate system of the screen (X_{d}, Y_{d}) is reflected by the substrate at a point Pₛ with coordinates (xₛ, yₛ) in the local coordinate system of the sample (Xₛ, Yₛ) and imaged on the camera sensor at point P_{c} with coordinates (x_{c}, y_{c}) in the local coordinate system of the camera sensor (X_{c}, Y_{c}).

Examples of points P_{d}, Pₛ, and P_{c} are indicated in FIGURE 5.

The geometrical relationship between these points P_{d}, Pₛ, and P_{c} depends principally on the optics (e.g., the imaging lens), the respective positions of the illumination screen, the wafer, and the camera in the global reference system (X, Y, Z) of the inspection device. The relationship also depends on the shape of the wafer surface.

In order to be able to apply advanced surface topology analysis such as the phase-retrieval method previously described, it is necessary to know the geometrical relationship between the points of the screen P_{d} and the points of the camera sensor P_{c}. It is also preferable to know the geometrical relationship of the points of the substrate Pₛ, at least for a reference wafer.

Thanks to the embodiments of the device according to the present invention as previously described, it is possible to have the points P_{d} of the illumination screen, the points P_{c} of the camera sensor and even the points Pₛ of the wafer surface in a fixed positional relationship with respect to each other, when the elements are in the operational position.

The fixed positional relationship can be established by calibration, for example using a reference wafer positioned in a reference position in the wafer support frame such that its height and its normal to the surface are known, or at least defined.

The relationship between the points P_{d} of the illumination screen and the points P_{c} on the camera sensor can then be obtained by displaying patterns on the illumination screen which can be identified on the image, after being reflected by the surface of the reference wafer.

The relationship between the points Pₛ on the wafer surface and the points P_{c} on the camera sensor can be obtained by imaging a reference wafer with patterns on its surface and identifying them in the image. The reference wafer is positioned in a reference position. This relationship determines the position of the wafer in the field of view of the camera.

As a result, using phase-retrieval algorithms, it is possible to relate any point P_{d} of the illumination screen, in which a phase value is displayed, to a point P_{c} on the camera sensor in which that same phase value is acquired after having been reflected in point Pₛ on the reference sample surface.

When carrying out inspections measurements with wafers to be inspected, the deformations of a pattern visible in an image acquired by the camera after being displayed on the illumination screen and reflected on the wafer can be used to compute the deformation, height differences, or curvature of the surface of the wafer to be inspected.

The device according to the invention also comprises a control unit configured to operate the at least one inspection module.

In particular, the control unit may be configured for controlling display of the patterns on the illumination screen, the capturing of the images, for retrieving phase maps from the images, and/or for calculating topography or other inspection results from the phase measurements. The control unit may also be configured for controlling or commanding the displacements of the inspection module(s) and/or the wafer support frame, and/or the installation of the wafer to be inspected on the wafer support frame, for example by means of a robotic arm.

Of course, the invention is not limited to the examples detailed above.

## Claims

1. A deflectometry inspection device (1) for semiconductor substrates, comprising:
- a substrate support frame (30) configured to support a substrate (4) to be inspected,
- at least one inspection module (20, 20a, 20b) comprising an inspection module frame (6, 6a, 6b), an illumination screen (2, 2a, 2b) configured to illuminate the substrate (4) to be inspected with a pattern (5), and a camera (3, 3a, 3b) configured to detect light reflected by the surface of the substrate (4) and to image the surface of the substrate (4) with the pattern, the illumination screen (2, 2a, 2b) and the camera (3, 3a, 3b) being arranged in a fixed positional relationship with respect to each other on the inspection module frame (20, 20a, 20b),
wherein the inspection module frame (6, 6a, 6b) is movable between an operational position and a maintenance position without altering the fixed positional relationship between the illumination screen (2, 2a, 2b) and the camera (3, 3a, 3b), wherein in the operational position, the inspection module (20, 20a, 20b) is configured to carry out inspection measurements, and in the maintenance position, the inspection module (20, 20a, 20b) is accessible by an operator.

2. The deflectometry inspection device (1) according to claim 1, wherein any point, P_{d}, in the plane of the illumination screen (2, 2a, 2b), and any point, P_{c}, in an image plane of the camera (3, 3a, 3b) are in a fixed and same positional relationship with each other when the inspection module (20, 20a, 20b) is in the operational position and in the maintenance position, respectively.

3. The deflectometry inspection device (1) according to claim 2, wherein the fixed positional relationship is established by calibration.

4. The deflectometry inspection device (1) according to claim 2 or 3, wherein any point, Pₛ, in a substrate surface plane is in a fixed and known relationship with the points P_{d} in the plane of the illumination screen (2, 2a, 2b) and the points P_{c} in the image plane of the camera (3, 3a, 3b) when the inspection module is in the operational position.

5. The deflectometry inspection device (1) according to claim 4, wherein the fixed and known relationship is established by calibration using a calibration substrate.

6. The deflectometry inspection device (1) according to any one of the preceding claims, wherein the camera (3, 3a, 3b) and/or the illumination screen (2, 2a, 2b) are removably and replaceably fixed to the inspection module frame (6, 6a, 6b).

7. The deflectometry inspection device (1) according to any one of the preceding claims, wherein the substrate support frame (30) is movable between an operational position and a maintenance position.

8. The deflectometry inspection device (1) according to any one of the preceding claims, wherein the inspection module frame (6, 6a, 6b) and/or the substrate support frame (30) is removably arranged in the device (1).

9. The deflectometry inspection device (1) according to the preceding claims, wherein a plane of the surface to be inspected, and a lens plane and an image plane of the camera (3, 3a, 3b) are arranged according to a Scheimpflug configuration.

10. The deflectometry inspection device (1) according to any one of the preceding claims, comprising two inspection modules (20a, 20b), of which one is arranged on either side of the substrate support frame (30) in the operational position.

11. The deflectometry inspection device (1) according to any one of the preceding claims, wherein the illumination screen (2, 2a, 2b) is rotatably mounted on the inspection module frame (6, 6a, 6b) by a rotation module configured to rotate the illumination screen (2, 2a, 2b) around its normal.

12. The deflectometry inspection device (1) according to any one of the preceding claims, wherein the inspection module frame (6, 6a, 6b) has a perforated structure.

13. The deflectometry inspection device (1) according to any one of the preceding claims, further comprising a control unit configured to operate the at least one inspection module (20, 20a, 20b).
